# EUROPEAN PATENT SPECIFICATION

(11) **EP 0 350 126 B1**
(45) Date of publication and mention of the grant of the patent: **16.06.1993**
(21) Application number: 89201764.1
(22) Date of filing: 03.07.1989
(51) Int. Cl.: A01B 33/08, F16H 57/02

(54) **A soil cultivating machine**
Bodenbearbeitungsmaschine
Machine pour travailler le sol

(30) Priority: 06.07.1988 NL 8801705
(43) Date of publication of application: 10.01.1990
(73) Proprietor: C. van der Lely N.V., NL-3155 PD Maasland (NL)
(72) Inventor: van der Lely, Cornelis, Zug (CH); van der Lely, Ary, Maasland (NL)
(74) Representative: Mulder, Herman

(56) References cited:
- EP-A- 0 186 784
- NL-A- 7 216 409
- NL-A- 7 712 318
- US-A- 1 525 994
- US-A- 2 906 137
- US-A- 3 866 789
- US-A- 4 512 414

## Description

The invention relates to a soil cultivating machine comprising a frame portion in which is accommodated a transmission intended to drive a plurality of soil working members placed in a side-by-side relationship, each of said members is rotatable about an upwardly extending shaft, which carries an intermeshing gear wheel, said shaft is supported at its uppermost end by a bearing in a bearing housing, preferably a ball bearing.

Such machines are well-known, e.g. from NL-A-7216409. During operation, machines of the above-defined type usually require a considerable amount of power, as a result of which the pressure in the space accommodating the transmission may become too high, which should be prevented in an effective manner. The frame portion of these machines which form a gear box, are normally filled with grease.

During operation, the machines usually require a considerable amount of power, as a result of which the pressure in the gear box may become too high. This high pressure may result in leakage, in particular on those places where a cover is connected to the gear box. Moreover, during the cooling period of the gear box, air and dust may be sucked in into the gear box.

It is the aim of the invention to overcome these problems. According to the invention, a bearings is provided with a decompressor means for the frame portion, said decompressor means arranged at the bearing housing comprises a decompressor tube, the upper side of which is provided with a decompressor valve.

With this construction a specific and particularly reliable decompression means for this type of gear box is obtained, which is advantageous for the high temperatures that may occur during long working periods of the machine.

From EP-A-186784 it is known to decompress a gear box through a ball bearing. To this end, the ball bearing is provided with a porous bearing member. The construction according to the above-mentioned application is not very suitable for ground working machines, due to the great amount of dust which it produces.

For a better understanding of the invention and to show how the same may be carried into effect, reference will now be made, by way of example, to some embodiments shown in the accompanying drawings, in which:

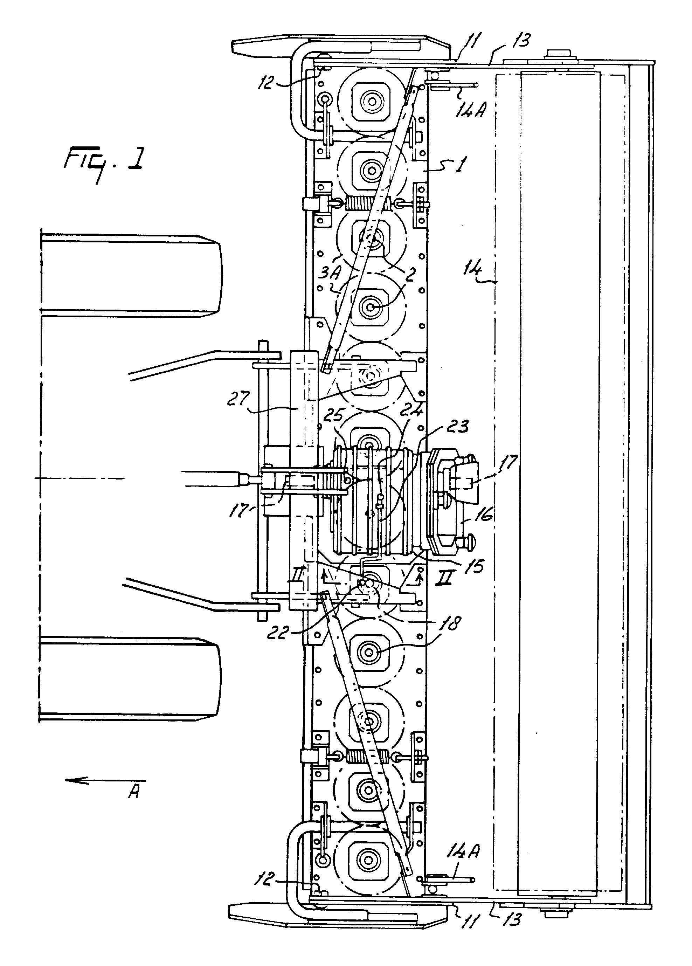

Figure 1 is a plan view of a soil cultivating machine according to the invention;
Figure 2 is, to an enlarged scale, a view taken on the line II-II in Figure 1;
Figure 3 is a side view of the machine shown in Figure 1 and comprising a second embodiment of the decompressor means for the space accommodating the transmission;
Figure 4 is a view taken in the direction of the arrow IV in Figure 3;
Figure 5 is, to an enlarged scale, a view taken in the direction of the arrow V in Figure 3;
Figure 6 is a view taken in the direction of the arrow VI in Figure 5, and
Figure 7 is a view taken in the direction of the arrow VII in Figure 6.

The machine shown in the drawings is a soil cultivating machine, in particular one for the preparation of a seed bed.

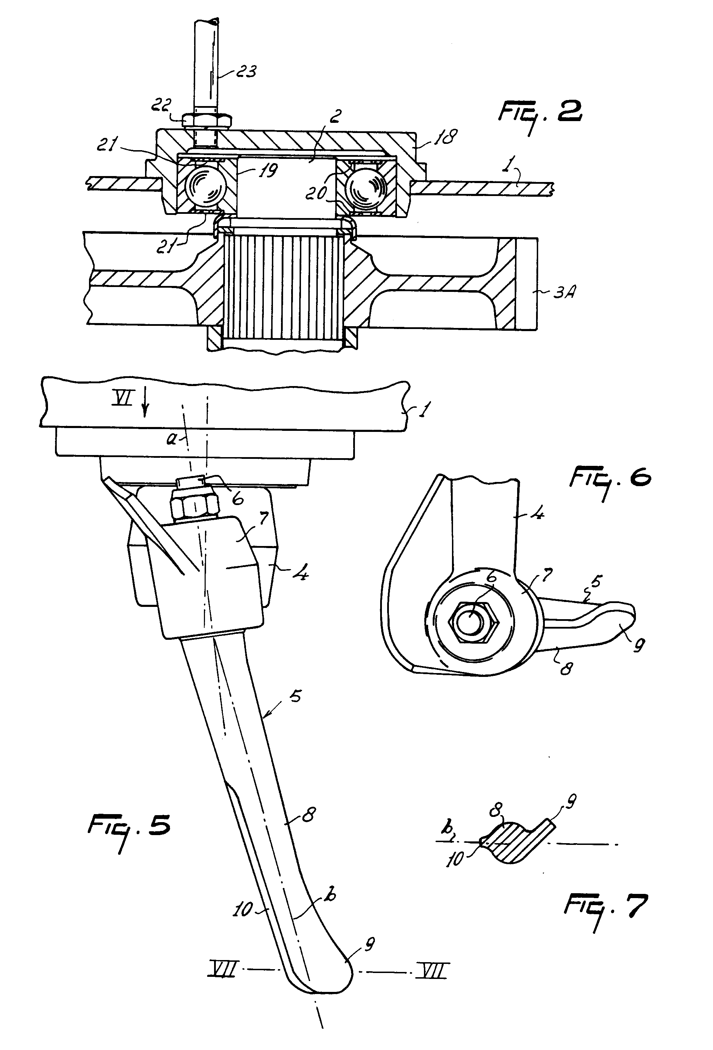

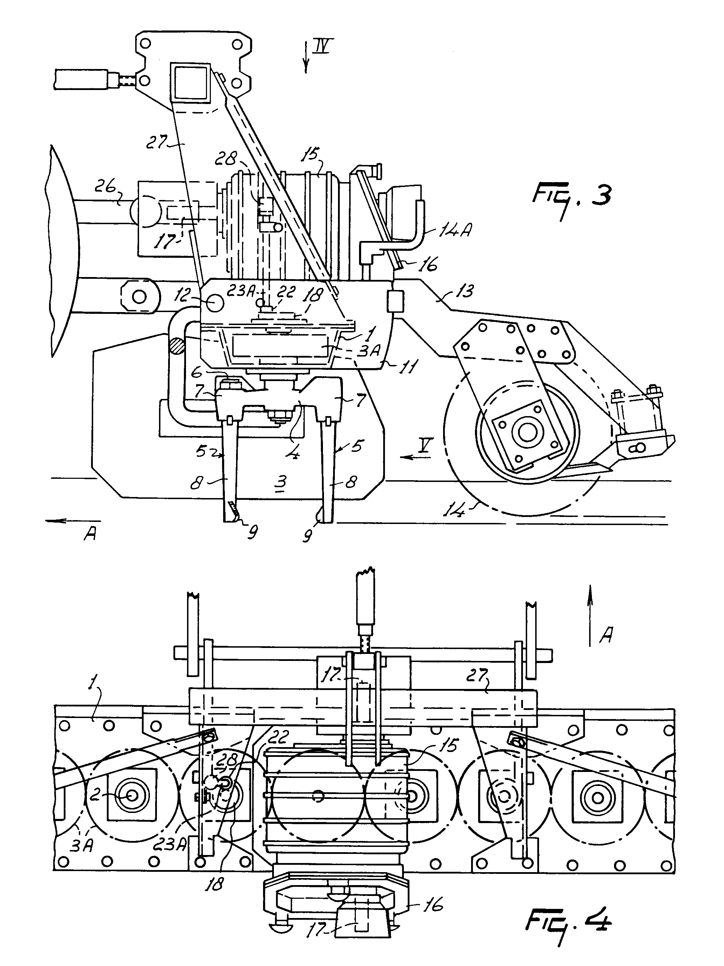

The machine comprises a box-like frame portion 1 which extends transversely to the direction of operative travel A and wherein there are supported at equal interspaces of preferably 25 cms the upwardly directed, preferably vertical, shafts 2 of soil working members 3. At its end projecting from the bottom side of the frame portion 1, the shaft 2 of each soil working member 3 is provided with an at least substantially horizontal carrier 4. At its ends, each carrier 4 is fitted with downwardly extending soil working elements 5 constituted by tines. Each of the tines 5 includes a connecting portion 6 which is received in a holder 7 arranged at the ends of the carrier 4. The holder 7 is cylindrical and includes an aperture for the connecting portion 6, the arrangement being such that the longitudinal centre line a of the connecting portion 6 coincides with that of the holder 7 (Figure 5). Relative to the rotational direction imparted to a carrier 4 during operation, the longitudinal centre line of the holder 7 is arranged forwardly inclining at an angle of preferably 8° with the rotational axis of a soil working member 3. The connecting portion 6 of a tine 5 merges into an active portion 8 and encloses an angle therewith, the arrangement being such that the extension of the longitudinal centre line a of the connecting portion 6 encloses an angle of approximately 8° with the longitudinal centre line b of the active portion 8 (Figure 5). From its merger in the connecting portion 6, each active portion 8 tapers and has a cross-section, the circumference of which is substantially circular. At its free end, each active portion 8 includes a fin-like part 9 which, as is apparent from Figures 6 and 7, is deflected inwardly into the direction of the axis of the soil working member 3, the arrangement being such that the boundary faces of said fin-like part in situ enclose an angle with the tangent of preferably more than 20°. Relative to the rotational direction of a soil working member 3, the fin-like part 9 is directed rearwardly. At its leading side, the active portion 8 includes a rib 10 extending from its free end to at least as far as its centre. Seen perpendicularly to the carrier 4, the active tine portions 8 extend at least substantially parallel to the rotational axis of the soil working member 3. Each soil working member 3 includes a left-hand tine 5 and a right-hand one.

The ends of the box-like frame portion 1 are closed by means of plates 11 which extend at least substantially parallel to a vertical plane in the direction of operative travel A of the machine. Near its leading side, each of the plates 11 is provided with a transverse pin 12, the arrangement being such that the longitudinal centre lines of the respective pins 12 are in alignment. About each of the pins 12 there is arranged freely pivotably an arm 13 which extends rearwardly along the inner side of a plate 11. Near the rear side of the frame portion 1 there is arranged an adjusting device 14A, by means of which each arm 13 can be adjusted to and locked in a plurality of positions, the adjusting device 14A preferably being constituted by a threaded spindle. Between the free rear ends of the arms 13 there is supported freely rotatably a roller 14 which, in this embodiment, is designed as a packer roller. However, it may also be designed as a cage roller.

Inside the box-like frame portion 1, each of the shafts 2 for a soil working member 3 is provided with a pinion 3A, the arrangement being such that the pinions 3A on the shafts 2 of adjacent soil working members 3 are in driving connection with each other. At its bottom side, each of the shafts 2 is bearing-supported by means of a ball bearing accommodated in a bearing housing. Near the centre of the box-like frame portion 1, the shaft 2 of a soil working member 3 is extended upwardly and reaches by means of this extension into a gear box 15, inside which the extension is in driving connection via a bevel gear transmission to a shaft which extends in the direction of operative travel A and, via a speed variator 16 located at the rear side of the gear box 15, is in driving connection to a superjacent shaft 17 which, seen in plan view, is located in the centre of the box-like frame portion 1 and projects from the gear box 15 both at the front side and at the rear side. With the exception of the above-mentioned, extended shaft, each of the shafts 2 of the soil working members 3 is bearing-supported at the top side of the frame portion 1 by means of a ball bearing 19 accommodated in a bearing housing 18, the said ball bearing 19 including a cover ring 20 at the top side as well as at the bottom side. At the bearing of a shaft 2 of a soil working member 3 present beside the gear box 15, the relevant cover rings 20 are provided with opposite bores 21 (Figure 2). Above the bores 21 there is arranged in the bearing housing 18 a valve 22 (Figure 3). Onto the valve 22 there is pushed the one end of a tube 23, the other end of which is pushed onto a valve 24 at the top side of the gear box 15, which gear box includes a decompressor valve 25. The end of the shaft 17 projecting from the gear box 15 at the front side can be connected to the power take-off shaft of a tractor via an intermediate shaft 26. Near its front side, the box-like frame portion 1 is fitted with a trestle 27 including at its front side a three-point connection for coupling the machine to the three-point lifting hitch of a tractor.

The machine as described in the foregoing operates as follows:
During operation, the machine is connected to the three-point lifting hitch of a tractor by means of the trestle 27 and, during movement in a direction indicated by the arrow A, the respective soil working members 3 are driven such from the power take-off shaft of the tractor via the intermediate shaft 26 and the above-described transmission including the pinions 3A accommodated in the frame portion 1 that two adjacent soil working members 3 rotate in opposite directions, whereby their tine-shaped soil working elements 5 cultivate at least contiguous strips of soil. As has been stated in the foregoing already, the cylindrical holder 7 for each tine 5 inclines forwardly relative to the rotational direction of a soil working member at an angle of preferably 8° and the connecting portion 6 of a tine 5 present in the holder encloses in the described manner an angle of approximately 8° with the, relative to the rotational direction, trailing active portion 8 of the tine. Due to this a reduction in wear can be obtained. Due to the fact that the fin-like part 9 is deflected inwardly at an angle of at least 20° with the tangent, which fin-like part 9 extends rearwardly and is located at the end of the active portion 8 of a tine 5, it is achieved that, during the cycloidal path described by the tine end during operation, this fin-like part 9 assumes such a position that the wear at the end of the active tine portion is reduced, since this part 9 substantially follows the cycloidal path. Also, due to this the fin-like part 9 cannot smear. During operation, inside the box-like frame portion 1 there is produced an overpressure owing to the rapidly rotating pinions 3A. This overpressure can be relieved by the decompressor means constituted by the bores 21 in the cover rings 20 of the bearing 19 for the shaft 2, the valve 22 arranged on the bearing housing 18, the tube 23 and the valve 25. In order to relieve the overpressure, it is also possible to employ a construction as shown in Figures 3 and 4. In this construction, a tube 23A is passed upwardly from the valve 22 at the inner side of the trestle 27 and is provided at its free upper end with a valve 28. Both constructions are insensitive to fouling that might result in a clogging.

## Claims

1. A soil cultivating machine comprising a frame portion (1) in which is accommodated a transmission intended to drive a plurality of soil working members (3) placed in a side-by-side relationship, each of said members (3) is rotatable about an upwardly extending shaft (2), which carries an intermeshing gear wheel (3A), said shaft (2) is supported at its uppermost end by a bearing (19) in a bearing housing (18), preferably a ball bearing, characterized in that a bearing (19) is provided with a decompressor means for the frame portion (1), said decompressor means arranged at the bearing housing (18) comprises a decompressor tube (23, 23A), the upper side of which is provided with a decompressor valve (24, 28).

2. A soil cultivating machine according to claim 1, having a central gear box, characterized in that the decompressor means for the frame portion (1) are in the central gear box (15), via which the transmission is driven.

3. A soil cultivating machine as claimed in any one of the preceding claims, characterized in that above a valve (22) in the bearing housing (18) the tube (23, 23A) is connected.

4. A soil cultivating machine as claimed in any one of the preceding claims, wherein the machine is provided with a trestle (27) by means of which it can be coupled to the lifting hitch of a tractor, characterized in that the upper end of the decompressor means (23A, 28) terminates near said trestle (27).

5. A soil cultivating machine as claimed in claim 3 or 4, characterized in that the tube (23A) is located at the inner side of a coupling trestle (27) present on the frame portion (1).

6. A soil cultivating machine as claimed in any one of the preceding claims, characterized in that the ball bearing (19) is provided with cover rings (20) which are provided with apertures (21) which form part of the decompression means.

## Patentansprüche

1. Bodenbearbeitungsmaschine mit einem Gestellteil (1), in dem ein Getriebe zum Antrieb einer Vielzahl von nebeneinanderliegenden Bodenbearbeitungswerkzeugen (3) angeordnet ist, wobei jedes Werkzeug (3) um die Achse einer sich nach oben erstreckenden, mit einem Getriebezahnrad (3A) versehenen Welle (2) drehbar ist, deren oberes Ende durch ein in einem Lagergehäuse (18) angeordnetes Lager (19), vorzugsweise durch ein Kugellager abgestützt ist,
dadurch gekennzeichnet, daß ein Lager (19) eine Druckentlastung für das Gestellteil (1) aufweist, die in dem Lagergehäuse (18) angeordnet ist und ein Druckentlastungs-Rohr (23, 23A) aufweist, dessen obere Seite mit einem Druckentlastungs-Ventil (24, 28) versehen ist.

2. Bodenbearbeitungsmaschine nach Anspruch 1, mit einem zentralen Getriebegehäuse,
dadurch gekennzeichnet, daß die Druckentlastung für das Gestellteil (1) in dem zentralen Getriebegehäuse (15) angeordnet ist, von dem aus das Getriebe angetrieben wird.

3. Bodenbearbeitungsmaschine nach einem der vorhergehenden Ansprüche,
dadurch gekennzeichnet, daß oberhalb eines Ventils (22) in dem Lagergehäuse (18) das Rohr (23, 23A) angeschlossen ist.

4. Bodenbearbeitungsmaschine nach einem der vorhergehenden Ansprüche, mit einem Anbaubock (27), mittels dessen sie an die Hebevorrichtung eines Schleppers anschließbar ist,
dadurch gekennzeichnet, daß das obere Ende der Druckentlastung (23A, 28) in der Nähe des Anbaubockes (27) endet.

5. Bodenbearbeitungsmaschine nach Anspruch 3 oder 4,
dadurch gekennzeichnet, daß das Rohr (23A) an der Innenseite eines auf dem Gestellteil (1) befindlichen Anbaubockes (27) angeordnet ist.

6. Bodenbearbeitungsmaschine nach einem der vorhergehenden Ansprüche,
dadurch gekennzeichnet, daß das Kugellager (19) mit Deck-Ringscheiben (20) versehen ist, die Öffnungen (21) aufweisen, welche einen Teil der Druckentlastung bilden.

## Revendications

1. Machine pour cultiver le sol comprenant une partie de châssis (1) dans laquelle est logée une transmission destinée à entraîner une pluralité d'organes de travail du sol (3) disposés côte à côte, chacun desdits organes (3) étant rotatif autour d'un arbre (2) s'étendant vers le haut qui porte un pignon (3A) en engrènement, ledit arbre (2) étant supporté à son extrémité supérieure par un roulement (19) dans un logement de roulement (18), de préférence un roulement à billes,
**caractérisée** en ce qu'un roulement (19) est muni d'un moyen de décompression pour la partie de châssis (1), ledit moyen de décompression disposé sur le logement du roulement (18) comprenant un tube de décompression (23, 23A) dont le côté supérieur est muni d'une soupape de décompression (24, 28).

2. Machine pour cultiver le sol selon la revendication 1, ayant une boîte d'engrenages centrale, caractérisée en ce que les moyens de décompression pour la partie de châssis (1) sont dans la boîte d'engrenages centrale (15) par l'intermédiaire de laquelle est entraînée la transmission.

3. Machine pour cultiver le sol selon l'une quelconque des revendications précédentes, caractérisée en ce que le tube (23, 23A) est relié au dessus d'une soupape (22) dans le logement (18) du roulement.

4. Machine pour cultiver le sol selon l'une quelconque des revendications précédentes, dans laquelle la machine est munie d'un chevalet (27) au moyen duquel elle peut être attelée au dispositif d'attelage/levage d'un tracteur, caractérisée en ce que l'extrémité supérieure du moyen de décompression (23A, 28) se termine près dudit chevalet (27).

5. Machine pour cultiver le sol selon la revendication 3 ou 4, caractérisée en ce que le tube (23A) est situé sur le côté intérieur d'un chevalet d'attelage (27) présent sur la partie de châssis (1).

6. Machine pour cultiver le sol selon l'une quelconque des revendications précédentes, caractérisée en ce que le roulement à billes (19) est muni de bagues de couverture (20) qui sont munies d'ouvertures (21) faisant partie des moyens de décompression.
